# EUROPEAN PATENT APPLICATION

(11) **EP 4 704 429 A1**
(43) Date of publication of application: **04.03.2026**
(21) Application number: 24795824.2
(22) Date of filing: 08.04.2024
(51) Int. Cl.: H04N 21/431

(54) **MULTIMEDIA RESOURCE PROCESSING METHOD AND APPARATUS, DEVICE, AND STORAGE MEDIUM**

(30) Priority: 23.04.2023 CN 202310443774
(71) Applicant: Beijing Zitiao Network Technology Co., Ltd., Beijing 100190 (CN)
(72) Inventor: JIANG, Jiaxin, Beijing 100028 (CN); LI, Ke, Beijing 100028 (CN)
(74) Representative: Grünecker Patent- und Rechtsanwälte PartG mbB
(86) International application number: PCT/CN2024/086665
(87) International publication number: WO 2024/222443

(57) **Abstract**

This disclosure provides a method, apparatus, device, and storage medium for processing multimedia resources. The method includes: acquiring, based on a predetermined trigger operation acting on a playback page of a first multimedia resource, a related recommendation information flow corresponding to the first multimedia resource, and displaying the related recommendation information flow on a related recommendation page; and when a first predetermined sliding operation acting on the related recommendation page is received, determining a next multimedia resource in the related recommendation information flow as a target multimedia resource, and playing the target multimedia resource in a top page region on the related recommendation page. According to this disclosure, based on the first predetermined sliding operation on the related recommendation page, the next multimedia resource in the related recommendation information flow may be triggered to be played in the top page region on the related recommendation page, so that a playing mode of the multimedia resources in the related recommendation information flow on the related recommendation page is diversified, thereby enriching related functions of the multimedia resources and improving user experience.

## Description

This application claims priority to Chinese Patent Application No. 202310443774.0, filed on April 23, 2023, and entitled "METHOD, APPARATUS, DEVICE, AND STORAGE MEDIUM FOR PROCESSING MULTIMEDIA RESOURCES", the entire content of which is incorporated herein by reference.

### FIELD

The present disclosure relates to the field of data processing, in particular to a method, apparatus, device and storage medium for processing multimedia resources.

### BACKGROUND

With the continuous advancement of multimedia resources processing technologies, the functional demands related to multimedia resources from people are becoming more and more diversified. Therefore, how to enrich the functions related to multimedia resources, satisfy more demands of users and thus improve the user experience is a technical problem that urgently requires a solution at present.

### SUMMARY

In order to solve the above technical problem, the present disclosure provides a method, apparatus, device and storage medium for processing multimedia resources, which can enrich interactive functions based on multimedia resources and improve user experience.

In a first aspect, the present disclosure provides a method for processing multimedia resources. The method includes:
acquiring, based on a predetermined trigger operation acting on a playback page of a first multimedia resource, a related recommendation information flow corresponding to the first multimedia resource, and displaying the related recommendation information flow on a related recommendation page, wherein the related recommendation information flow includes a multimedia resource related to at least one feature dimension of the first multimedia resource, and the multimedia resources includes video and/or image-text content;
in response to a first predetermined sliding operation acting on the related recommendation page, determining a next multimedia resource adjacent to a currently played multimedia resource in the related recommendation information flow as a target multimedia resource, and playing the target multimedia resource in a top page region on the related recommendation page, the top page region being adapted to a display range of the target multimedia resource.

In an optional implementation, in response to the first predetermined sliding operation acting on the related recommendation page, determining the next multimedia resource adjacent to the currently played multimedia resource in the related recommendation information flow as the target multimedia resource includes:
in response to the first predetermined sliding operation acting on the related recommendation page, acquiring sliding information of the first predetermined sliding operation, wherein the sliding information includes a sliding speed and/or sliding displacement;
in accordance with a determination that the sliding information meets a first predetermined condition, determining the next multimedia resource adjacent to the currently played multimedia resource in the related recommendation information flow as the target multimedia resource, wherein the first predetermined condition is a matching condition for the sliding speed and/or the sliding displacement.

In an optional implementation, in accordance with a determination that the sliding information meets the first predetermined condition, determining the next multimedia resource adjacent to the currently played multimedia resource in the related recommendation information flow as the target multimedia resource includes:
in accordance with a determination that the sliding speed in the sliding information is greater than a predetermined speed threshold, or in accordance with a determination that the sliding speed in the sliding information is not greater than the predetermined speed threshold and the sliding displacement in the sliding information is greater than a predetermined displacement threshold, determining the next multimedia resource adjacent to the currently played multimedia resource in the related recommendation information flow as the target multimedia resource.

In an optional implementation, after displaying the related recommendation information flow on the related recommendation page, the method further includes:
in response to a selecting operation for any multimedia resource displayed on the related recommendation page, determining the selected multimedia resource as the target multimedia resource, and continuing playing the target multimedia resource in the top page region on the related recommendation page.

In an optional implementation, acquiring, based on the predetermined trigger operation acting on the playback page of the first multimedia resource, the related recommendation information flow corresponding to the first multimedia resource, and displaying the related recommendation information flow on the related recommendation page includes:
in response to a trigger operation for a related recommendation control on the playback page of the first multimedia resource, acquiring the related recommendation information flow corresponding to the first multimedia resource;
jumping from the playback page to the related recommendation page, and displaying the related recommendation information flow on the related recommendation page.

In an optional implementation, acquiring, based on the predetermined trigger operation acting on the playback page of the first multimedia resource, the related recommendation information flow corresponding to the first multimedia resource, and displaying the related recommendation information flow on the related recommendation page includes:
in response to a trigger operation acting within a theme display region on the playback page of the first multimedia resource, acquiring the related recommendation information flow corresponding to the first multimedia resource, and displaying, in a bottom panel, complete theme information of the first multimedia resource and the related recommendation information flow corresponding to the first multimedia resource;
in response to a second predetermined sliding operation acting on the bottom panel, displaying the related recommendation information flow corresponding to the first multimedia resource on the related recommendation page.

In an optional implementation, before displaying, in the bottom panel, the complete theme information of the first multimedia resource and the related recommendation information flow corresponding to the first multimedia resource, the method further includes:
playing, in a predetermined playback window on a recommendation details page and in a zoom-out manner, the first multimedia resource previously played on the playback page;
correspondingly, displaying, in the bottom panel, the complete theme information of the first multimedia resource and the related recommendation information flow corresponding to the first multimedia resource includes:
   displaying, in the bottom panel on the recommendation details page, the complete theme information of the first multimedia resource and the related recommendation information flow corresponding to the first multimedia resource.

In an optional implementation, displaying, in the bottom panel, the complete theme information of the first multimedia resource and the related recommendation information flow corresponding to the first multimedia resource includes:
displaying, in the bottom panel on the playback page, the complete theme information of the first multimedia resource and the related recommendation information flow corresponding to the first multimedia resource.

In a second aspect, the present disclosure provides an apparatus for processing multimedia resources. The apparatus includes:
an acquiring module, configured to acquire, based on a predetermined trigger operation acting on a playback page of a first multimedia resource, a related recommendation information flow corresponding to the first multimedia resource, and display the related recommendation information flow on a related recommendation page, wherein the related recommendation information flow includes a multimedia resource related to at least one feature dimension of the first multimedia resource, and the multimedia resource includes video and/or image-text content;
a first determining module, configured to, in response to a first predetermined sliding operation acting on the related recommendation page, determine a next multimedia resource adjacent to a currently played multimedia resource in the related recommendation information flow as a target multimedia resource, and play the target multimedia resource in a top page region on the related recommendation page, the top page region being adapted to a display range of the target multimedia resource.

In a third aspect, the present disclosure provides a computer-readable storage medium. The computer-readable storage medium stores instructions therein, wherein the instructions, when running on a terminal device, cause the terminal device to implement the above method.

In a fourth aspect, the present disclosure provides a device for processing multimedia resources. The device includes a memory, a processor, and a computer program stored in the memory and runnable on the processor, wherein when executing the computer program, the processor implements the above method.

In a fifth aspect, the present disclosure provides a computer program product. The computer program product includes a computer program/instructions, and when the computer program/instructions is executed by a processor, the processor implements the above method.

### BRIEF DESCRIPTION OF THE DRAWINGS

The accompanying drawings here, which are incorporated in the Description and constitute a part of the Description, show embodiments conforming to the present disclosure, and are used to explain the principles of the present disclosure together with the Description.

To describe the technical solutions in the embodiments of the present disclosure or in the prior art more clearly, the following briefly introduces the accompanying drawings required for describing the embodiments or the prior art. Apparently, a person of ordinary skill in the art may still derive other accompanying drawings from these accompanying drawings without creative efforts.
Fig. 1 is a flowchart of a method for processing multimedia resources according to an embodiment of the present disclosure;
Fig. 2 is a schematic diagram of a playback page according to an embodiment of the present disclosure;
Fig. 3 is a schematic diagram of another playback page according to an embodiment of the present disclosure;
Fig. 4a is a schematic diagram of a related recommendation page according to an embodiment of the present disclosure;
Fig. 4b is a schematic diagram of another related recommendation page according to an embodiment of the present disclosure;
Fig. 5 is a schematic diagram of a recommendation details page according to an embodiment of the present disclosure;
Fig. 6 is a schematic structural diagram of an apparatus for processing multimedia resources according to an embodiment of the present disclosure;
Fig. 7 is a schematic structural diagram of a device for processing multimedia resources according to an embodiment of the present disclosure.

### DETAILED DESCRIPTION

In order to understand the above objects, features and advantages of the present disclosure more clearly, the solutions of the present disclosure will be further described below. It should be noted that the embodiments of the present disclosure and the features in the embodiments may be combined with each other in the absence of conflict.

Many specific details are set forth in the following description to fully understand the present disclosure, but the present disclosure may also be implemented in other ways different from those described herein. Obviously, the embodiments in the Description are only part of the embodiments of the present disclosure, not all of the embodiments.

With the continuous advancement of multimedia resource processing technologies, the functional demands related to multimedia resources from people are becoming more and more diversified. Therefore, how to enrich the functions related to multimedia resources, satisfy more demands of users and thus improve the user experience is a technical problem that urgently requires a solution at present.

Therefore, the embodiments of the present invention provide a method for processing multimedia resources. The method includes the following steps: firstly, a related recommendation information flow corresponding to the first multimedia resource is acquired based on a predetermined trigger operation acting on a playback page of a first multimedia resource, and the related recommendation information flow is displayed on a related recommendation page; and then, when a first predetermined sliding operation acting on the related recommendation page is received, a next multimedia resource adjacent to a currently played multimedia resource in the related recommendation information flow is determined as a target multimedia resource, and the target multimedia resource is played in a top page region on the related recommendation page. It can be seen that according to the embodiments of the present disclosure, based on the first predetermined sliding operation on the related recommendation page, the next multimedia resource in the related recommendation information flow can be triggered to be played in the top page region on the related recommendation page, so that a playing mode of the multimedia resources in the related recommendation information flow on the related recommendation page is diversified, thereby enriching related functions of the multimedia resources and improving user experience.

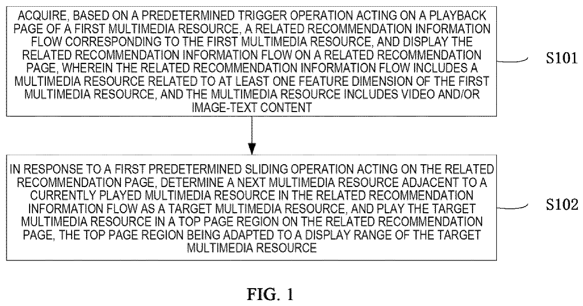

Based on this, the embodiments of the present disclosure provide a method for processing multimedia resources. Referring to Fig. 1, it is a flowchart of a method for processing multimedia resources according to an embodiment of the present disclosure. The method includes the following steps.

S101: based on a predetermined trigger operation acting on a playback page of a first multimedia resource, a related recommendation information flow corresponding to the first multimedia resource is acquired, and the related recommendation information flow is displayed on a related recommendation page.

In some embodiments, the related recommendation information flow includes a multimedia resource related to at least one feature dimension of the first multimedia resource, and the multimedia resource includes video and/or image-text content.

The method for processing the multimedia resources according to the embodiment of the present disclosure may be applied to clients. For example, the clients may include clients deployed on smart phones, clients deployed on tablet computers, and the like.

In the embodiment of the present disclosure, a displaying style of the related recommendation page is different from that of the playback page. Specifically, the related recommendation page is configured to display the related recommendation information flow corresponding to the first multimedia resource displayed on the playback page.

In the embodiment of the present disclosure, the first multimedia resource may be any multimedia resource, and the first multimedia resource may belong to any information flow, such as a recommendation information flow. Specifically, the first multimedia resource may be any video in any video stream, and may also be any piece of image-text content, and the like.

In an optional implementation, the predetermined trigger operation acting on the playback page of the first multimedia resource may include a trigger operation, such as a click operation, sliding operation and long-press operation, acting within a theme display region on the playback page of the first multimedia resource. In addition, the theme display region may also be provided with an "Unfold" control, so that the click operation acting on the "Unfold" control in the theme display region can trigger the acquisition of the related recommendation information flow corresponding to the first multimedia resource, and the related recommendation information flow can be displayed on the related recommendation page.

In another optional implementation, the predetermined trigger operation acting on the playback page of the first multimedia resource may further include a trigger operation, such as a click operation and long-press operation, for a related recommendation control on the playback page of the first multimedia resource, and the trigger operation is configured to trigger the acquisition of the related recommendation information flow corresponding to the first multimedia resource.

In the embodiment of the present disclosure, the related recommendation information flow corresponding to the first multimedia resource may include a predetermined number of multimedia resources related to at least one feature dimension of the first multimedia resource, wherein the multimedia resources in the related recommendation information flow may include at least one type of multimedia resources in video and image-text content. For example, assuming that the feature dimension corresponding to the first multimedia resource may include at least one content tag feature dimension, location feature dimension, keyword feature dimension, and key event feature dimension, and the like, the related recommendation information flow corresponding to the first multimedia resource may include image-text content determined based on features of the at least one content tag feature dimension, a video determined based on the location feature dimension, and the like.

In the embodiment of the present disclosure, when the predetermined trigger operation acting on the playback page of the first multimedia resource is received, the related recommendation information flow corresponding to the first multimedia resource is acquired, and the related recommendation information flow is displayed on the related recommendation page.

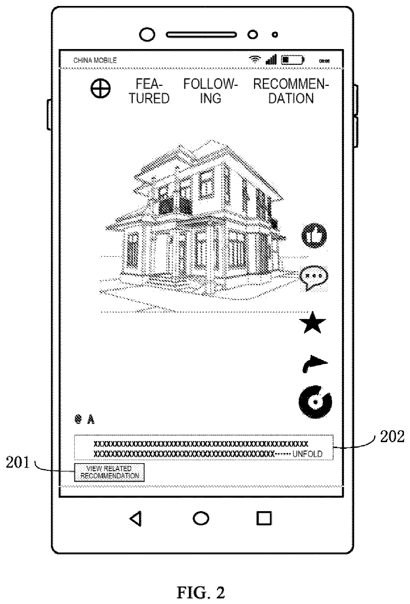

In an optional implementation, the related recommendation page may be displayed upon a trigger operation for a related recommendation control. As shown in Fig. 2, which is a schematic diagram of a playback page of a first multimedia resource according to an embodiment of the present disclosure, when a click operation acting on a related recommendation control 201 on the playback page of the first multimedia resource is received, a related recommendation information flow corresponding to the first multimedia resource is acquired; and an operation of jumping from the playback page shown in Fig. 2 to a related recommendation page is performed, and the related recommendation information flow is displayed on the related recommendation page. Other ways to trigger the display of the related recommendation page will be introduced in the following embodiments, and are not described in details here.

In practical application, each multimedia resource in the related recommendation information flow corresponding to the first multimedia resource is displayed on the related recommendation page.

In an optional implementation, a user's avatar, a user's nickname and the like corresponding to a user who publishes multimedia resources may be displayed on the related recommendation page. By clicking the user's avatar, or the user's nickname or the like, a user's personal homepage is triggered to be displayed, so that a current user can know information of the user who publishes the multimedia resources.

In another optional implementation, a "Follow" control corresponding to the user who publishes the multimedia resources may also be displayed on the related recommendation page. When the click operation acting on the "Follow" control corresponding to the user who publishes the multimedia resources is received, a following relationship between the current user and the user as the publisher is established, that is, the user who publishes the multimedia resources is determined as an object followed by the current user.

In another optional implementation, a predetermined interaction control corresponding to the multimedia resources may also be displayed on the related recommendation page. When a trigger operation acting on the predetermined interaction control is received, the number of interaction times corresponding to the predetermined interaction control is increased, wherein the predetermined interaction control may be a control configured to trigger an interaction operation. For example, the predetermined interaction control may include a like control, a comment control, a favorite control, a forward control and the like.

Since the predetermined interaction control has a specific interaction function, for example, the like control has a like function for a currently played multimedia resource, in the embodiment of the present disclosure, the number of interaction times corresponding to the predetermined interaction control can be increased when a trigger operation for the predetermined interaction control on the related recommendation page is received.

In another optional implementation, in a process of displaying the target multimedia resource on the related recommendation page, if theme content of the target multimedia resource is relatively long, for example, the theme content has a length to be displayed in more than two lines, an "Unfold" control may also be displayed in a theme display region corresponding to the target multimedia resource. When the trigger operation for the "Unfold" control is received, complete theme information of the target multimedia resource is displayed in the theme display region of the related recommendation page in a downward unfolding manner, so that the user can learn more about the related content of the target multimedia resource by browsing the complete theme information.

In practical application, in a process of displaying the complete theme information of the target multimedia resource in the theme display region of the related recommendation page, the complete theme information of the target multimedia resource may be automatically folded upwards by an upward sliding operation acting on the related recommendation page, and a next multimedia resource adjacent to the target multimedia resource in the related recommendation information flow may be displayed in another region on the related recommendation page.

S102: in response to a first predetermined sliding operation acting on the related recommendation page, a next multimedia resource adjacent to a currently played multimedia resource in the related recommendation information flow is determined as a target multimedia resource, and the target multimedia resource is displayed in a top page region on the related recommendation page, the top page region being adapted to a display range of the target multimedia resource.

In the embodiment of the present disclosure, the first predetermined sliding operation acting on the related recommendation page may include an upward sliding operation acting on the related recommendation page, and the like, and the upward sliding operation is configured to achieve an effect of switching from a currently played multimedia resource to a next adjacent multimedia resource and playing the next adjacent multimedia resource in the top page region on the related recommendation page.

In the embodiment of the present disclosure, the target multimedia resource refers to the next multimedia resource adjacent to the currently played multimedia resource in the related recommendation information flow. For example, assuming that the multimedia resources in the related recommendation information flow include video A, image-text content B, video C, and the like. When the first predetermined sliding operation acting on the related recommendation page is received, the next multimedia resource, namely the image-text content B, adjacent to the currently played multimedia resource (video A) in the related recommendation information flow is determined as the target multimedia resource.

It should be noted that the top page region on the related recommendation page can adapt to the display range of the target multimedia resource. For example, videos may be classified into a horizontal video and a vertical video which correspond to different display ranges, respectively. The display height of the horizontal video is lower than that of the vertical video. Therefore, a top page region for playing the horizontal video is smaller than that for playing the vertical video.

In an optional implementation, in a process of displaying the related recommendation information flow on the related recommendation page, the designated playback of the next multimedia resource can be triggered by not only the first predetermined sliding operation, but also a selecting operation for any multimedia resource displayed on the related recommendation page. The selected multimedia resource is determined as the target multimedia resource, and the step of playing the target multimedia resource in the top page region of the related recommendation page is continued.

In the embodiment of the present disclosure, the selecting operation for any multimedia resource displayed on the related recommendation page may include a click operation and the like acting on a displaying region corresponding to any multimedia resource displayed on the related recommendation page.

For example, assuming that multimedia resource A and multimedia resource B are displayed on the related recommendation page, the multimedia resource B is determined as the target multimedia resource when a click operation acting on a displaying region corresponding to the multimedia resource B is received, and the target multimedia resource (multimedia resource B) is played in the top page region on the related recommendation page, thereby further enriching the interaction function based on the multimedia resources and improving the user experience.

In the method for processing the multimedia resources according to the embodiment of the present invention, firstly, based on the predetermined trigger operation acting on the playback page of the first multimedia resource, the related recommendation information flow corresponding to the first multimedia resource is acquired, and the related recommendation information flow is displayed on the related recommendation page; and then, when the first predetermined sliding operation acting on the related recommendation page is received, the next multimedia resource adjacent to the currently played multimedia resource in the related recommendation information flow is determined as the target multimedia resource, and the target multimedia resource is played in the top page region on the related recommendation page. It can be seen that according to the embodiment of the present disclosure, based on the first predetermined sliding operation on the related recommendation page, the next multimedia resource in the related recommendation information flow can be triggered to be played in the top page region on the related recommendation page, so that a playing mode of the multimedia resources in the related recommendation information flow on the related recommendation page is diversified, thereby enriching related functions of the multimedia resources and improving the user experience.

In practical application, in order to achieve finer-grained control of the playback switching of the multimedia resources in the related recommendation information flow, when the first predetermined sliding operation acting on the related recommendation page is received, the playback can also be switched to the next multimedia resource adjacent to the currently played multimedia resource based on sliding information of the first predetermined sliding operation.

Specifically, when the first predetermined sliding operation acting on the related recommendation page is received, sliding information of the first predetermined sliding operation is acquired. In accordance with a determination that the sliding information of the first predetermined sliding operation meets a first predetermined condition, the next multimedia resource adjacent to the currently played multimedia resource in the related recommendation information flow is determined as the target multimedia resource, and the target multimedia resource is played in the top page region on the related recommendation page, so as to achieve the effect of playback switching of the multimedia resources in the related recommendation information flow on the related recommendation page.

In some embodiments, the sliding information of the first predetermined sliding operation may include at least one of a sliding speed and sliding displacement. The first predetermined condition is a matching condition for the sliding speed and/or the sliding displacement.

In an optional implementation, in accordance with a determination that the sliding speed in the sliding information of the first predetermined sliding operation is greater than a predetermined speed threshold, the next multimedia resource adjacent to the currently played multimedia resource in the related recommendation information flow is determined as the target multimedia resource, that is, when it is determined that the sliding speed in the sliding information is greater than the predetermined speed threshold, the next multimedia resource is played in the top page region of the related recommendation page.

In another optional implementation, in accordance with a determination that the sliding speed in the sliding information of the first predetermined sliding operation is not greater than the predetermined speed threshold and the sliding displacement in the sliding information is greater than a predetermined displacement threshold, the next multimedia resource adjacent to the currently played multimedia resource in the related recommendation information flow is determined as the target multimedia resource, that is, when it is determined that the sliding speed is not greater than the predetermined speed threshold, but the sliding displacement is greater than the predetermined displacement threshold, the next multimedia resource is played in the top page region of the related recommendation page.

In some embodiments, the predetermined displacement threshold may be a predetermined value or a value determined based on the total display height of a next multimedia resource adjacent to the currently played multimedia resource. For example, the predetermined displacement threshold may be a value of a predetermined proportion of the total display height of the next multimedia resource (hereinafter referred to as multimedia resource A) of the currently played multimedia resource on the related recommendation page. The predetermined displacement threshold is, for example, a value of 50% of the total display height of the multimedia resource A. That is, in accordance with a determination that the sliding speed of the first predetermined sliding operation is not greater than the predetermined speed threshold, when it is determined that the sliding displacement in the sliding information is not less than 50% of the total display height of the multimedia resource A, the multimedia resource A is determined as the target multimedia resource, and the target multimedia resource is played in the top page region on the related recommendation page. It should be noted that the predetermined proportion of 50% is only an example, and is not intended as a limitation.

In an optional implementation, in accordance with a determination that the sliding speed in the sliding information is not greater than the predetermined speed threshold and the sliding displacement in the sliding information is not greater than the predetermined displacement threshold, it means that the first predetermined sliding operation acting on the related recommendation page may be a user's misoperation. In order to ensure the user experience, the playback of the current multimedia resource in the top page region is kept in this case without switching to play another multimedia resource in the related recommendation information flow.

In another optional implementation, when a downward sliding operation acting on the related recommendation page is received, the displaying of the related recommendation information flow may also be quitted to return to the playback page of the first multimedia resource, and the playback of the first multimedia resource is continued.

It can be seen that in the embodiment of the present disclosure, when the first predetermined sliding operation acting on the related recommendation page is received, switching is performed to play the next multimedia resource in the related recommendation information flow based on the sliding information of the first predetermined sliding operation, so as to achieve finer-grained control of the playback switching of the multimedia resources in the related recommendation information flow, and further improve the user experience.

Based on the content in the above embodiments, in the embodiment of the present disclosure, the display of the related recommendation page may also be triggered by a trigger operation such as a click operation, sliding operation, long-press operation, and a trigger operation on the "Unfold" control acting within the theme display region on the playback page of the first multimedia resource.

In an optional implementation, when a trigger operation acting within a theme display region on the playback page of the first multimedia resource is received, the related recommendation information flow corresponding to the first multimedia resource is acquired, and complete theme information of the first multimedia resource and the related recommendation information flow corresponding to the first multimedia resource are displayed in a bottom panel.

In an optional implementation, the bottom panel may be displayed on the playback page of the first multimedia resource. Specifically, when a trigger operation acting within the theme display region on the playback page of the first multimedia resource is received, the complete theme information of the first multimedia resource and the related recommendation information flow corresponding to the first multimedia resource may be displayed in the bottom panel on the playback page.

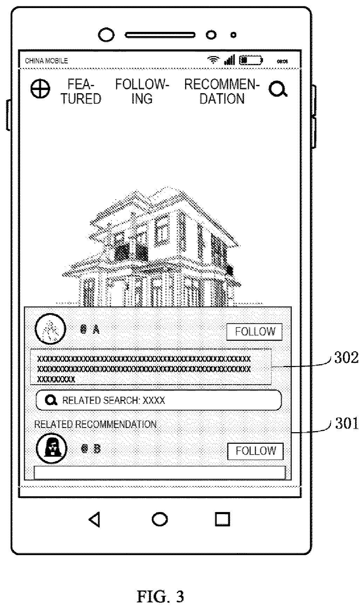

As shown in Fig. 2, when a trigger operation acting within a theme display region 202 on the playback page of the first multimedia resource is received, the related recommendation information flow corresponding to the first multimedia resource is acquired, and complete theme information 302 of the first multimedia resource and the related recommendation information flow corresponding to the first multimedia resource are displayed in a bottom panel 301 of the playback page shown in Fig. 3. Here, Fig. 3 is a schematic diagram of another playback page of the first multimedia resource according to an embodiment of the present disclosure.

In the embodiment of the present disclosure, in a process of displaying the complete theme information of the first multimedia resource in the bottom panel of the playback page of the first multimedia resource, when a second predetermined sliding operation acting on the bottom panel is received, the related recommendation information flow corresponding to the first multimedia resource is displayed on the related recommendation page.

In the embodiment of the present disclosure, the second predetermined sliding operation acting on the bottom panel may include an upward sliding operation acting on the bottom panel, and the like, and is configured to trigger an operation of jumping from the playback page displaying the bottom panel to the related recommendation page, and display the related recommendation information flow corresponding to the first multimedia resource on the related recommendation page. In addition, a downward sliding operation acting on the bottom panel can trigger the closing of the bottom panel to continue playing the first multimedia resource.

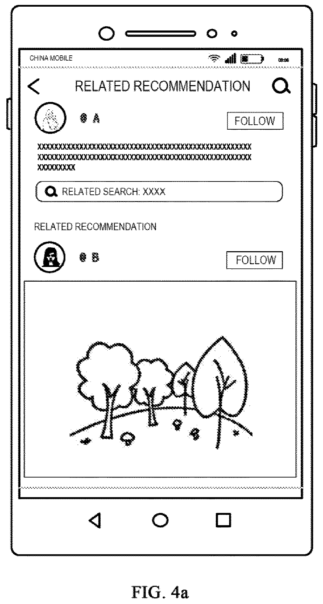

As shown in Fig. 3, when the second predetermined sliding operation acting on the bottom panel 301 is received, the operation of jumping from the playback page to the related recommendation page is performed, and the related recommendation information flow corresponding to the first multimedia resource is displayed on the related recommendation page shown in Fig. 4a, wherein Fig. 4a is a schematic diagram of a related recommendation page according to an embodiment of the present disclosure. In practical application, creator information, complete theme information and the like corresponding to the first multimedia resource may also be displayed on the related recommendation page, so that a current user can learn more information about the first multimedia resource based on the above display content.

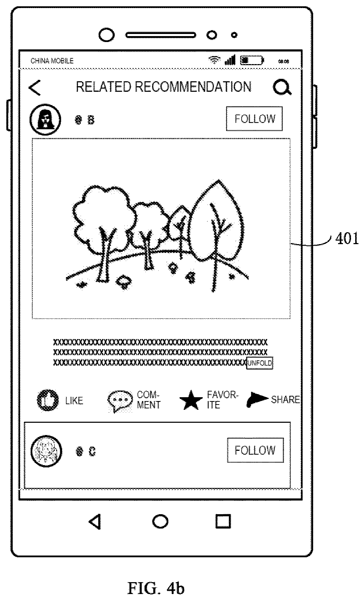

In addition, when the upward sliding operation acting on a region where the creator information, complete theme information and the like corresponding to the first multimedia resource are displayed on the related recommendation page, the related recommendation information flow corresponding to the first multimedia resource may be displayed in a folded manner, and the target multimedia resource in the related recommendation information flow may be displayed in a top page region on the related recommendation page. As shown in Fig. 4b, it is a schematic diagram of another related recommendation page according to an embodiment of the present disclosure, wherein a target multimedia resource is played in a top page region 401 on the related recommendation page. The size of the top page region adapts to a displaying range of the target multimedia resource. For example, videos may be classified into a horizontal video and a vertical video which correspond to different display ranges, respectively. The display height of the horizontal video is lower than that of the vertical video. Therefore, a top page region for playing the horizontal video is smaller than that for playing the vertical video.

In another optional implementation, the bottom panel may also be displayed on a recommendation details page corresponding to the first multimedia resource. Specifically, in order to further enrich the related functions of the multimedia resources and improve the user experience, the complete theme information of the first multimedia resource is acquired when the trigger operation acting within the theme display region on the playback page of the first multimedia resource is received. The first multimedia resource previously played on the playback page is played in a predetermined playback window on the recommendation details page in a zoom-out manner; and the first multimedia resource is continuously played in the predetermined playback window, and the related recommendation information flow of the first multimedia resource is displayed in the bottom panel on the recommendation details page.

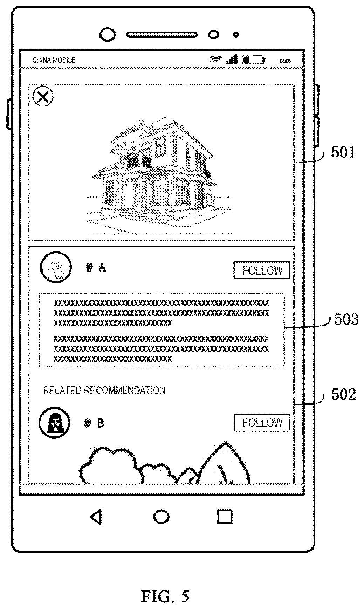

As shown in Fig. 2, when a trigger operation acting within the theme display region on the playback page is received, the complete theme information of the first multimedia resource is acquired, and the first multimedia resource previously played on the playback page shown in Fig. 2 is played in a predetermined playback window 501 on a recommendation details page shown in Fig. 5 in a zoom-out manner. The first multimedia resource is continuously played in the predetermined playback window 501, and complete theme information 503 of the first multimedia resource and the related recommendation information flow of the first multimedia resource are displayed in the bottom panel on the recommendation details page, wherein Fig. 5 is a schematic diagram of a recommendation details page according to an embodiment of the present disclosure.

In an optional implementation, in a process of displaying the complete theme information of the first multimedia resource and the related recommendation information flow corresponding to the first multimedia resource in the bottom panel of the recommendation details page, an operation of jumping from the recommendation details page to the related recommendation page may also be triggered by a predetermined sliding operation acting on the bottom panel of the recommendation details page; and the complete theme information of the first multimedia resource is displayed in the top region of the related recommendation page, and multimedia resources in the related recommendation information flow are displayed in other regions of the related recommendation page. Here, the predetermined sliding operation may include a downward sliding operation, right sliding operation and the like acting on the bottom panel, and may also include a click operation and the like acting on the predetermined playback window. The related recommendation page may be understood with reference to Fig. 4, and its details are not described here by the embodiment of the present disclosure.

It can be seen that in the embodiment of the present disclosure, the display of the complete theme information of the first multimedia resource and the related recommendation information flow corresponding to the first multimedia resource in the bottom panel can be triggered by the trigger operation acting within the theme display region on the playback page of the first multimedia resource, thereby further enriching displaying methods for the multimedia resources and improving the user experience.

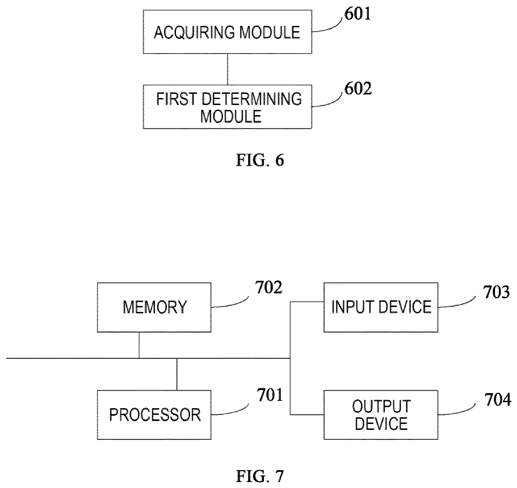

Based on the above method embodiments, the present disclosure further provides an apparatus for processing multimedia resources. Referring to Fig. 6, it is a schematic structural diagram of an apparatus for processing multimedia resources according to an embodiment of the present disclosure, and the apparatus includes:
an acquiring module 601, configured to acquire, based on a predetermined trigger operation acting on a playback page of a first multimedia resource, a related recommendation information flow corresponding to the first multimedia resource, and display the related recommendation information flow on a related recommendation page, wherein the related recommendation information flow includes a multimedia resource related to at least one feature dimension of the first multimedia resource, and the multimedia resource includes video and/or image-text content;
a first determining module 602, configured to, in response to a first predetermined sliding operation acting on the related recommendation page, determine a next multimedia resource adjacent to a currently played multimedia resource in the related recommendation information flow as a target multimedia resource, and play the target multimedia resource in a top page region on the related recommendation page.

In an optional implementation, the first determining module includes:
an acquiring submodule, configured to acquire, in response to the first predetermined sliding operation acting on the related recommendation page, sliding information of the first predetermined sliding operation, wherein the sliding information includes a sliding speed and/or sliding displacement;
a first determining sub-module, configured to, in accordance with a determination that the sliding information meets a first predetermined condition, determine the next multimedia resource adjacent to the currently played multimedia resource in the related recommendation information flow as the target multimedia resource, wherein the first predetermined condition is a matching condition for the sliding speed and/or the sliding displacement.

In an optional implementation, the first determining submodule includes:
a second determining submodule, configured to, in accordance with a determination that the sliding speed in the sliding information is greater than a predetermined speed threshold, or in accordance with a determination that the sliding speed in the sliding information is not greater than the predetermined speed threshold and the sliding displacement in the sliding information is greater than a predetermined displacement threshold, determine the next multimedia resource adjacent to the currently played multimedia resource in the related recommended information flow as the target multimedia resource.

In an optional implementation, the apparatus further includes:
a second determining module, configured to, in response to a selecting operation for any multimedia resource displayed on the related recommendation page, determine the selected multimedia resource as the target multimedia resource, and continue playing the target multimedia resource in the top page region on the related recommendation page.

In an optional implementation, the acquiring module includes:
a first acquiring submodule, configured to acquire, in response to a trigger operation for a related recommendation control on the playback page of the first multimedia resource, the related recommendation information flow corresponding to the first multimedia resource;
a displaying submodule, configured to perform an operation of jumping from the playback page to the related recommendation page, and display the related recommendation information flow on the related recommendation page.

In an optional implementation, the acquiring module includes:
a second acquiring submodule, configured to acquire, in response to a trigger operation acting within a theme display region on the playback page of the first multimedia resource, the related recommendation information flow corresponding to the first multimedia resource, and display, in a bottom panel, complete theme information of the first multimedia resource and the related recommendation information flow corresponding to the first multimedia resource;
a first display submodule, configured to, in response to a second predetermined sliding operation acting on the bottom panel, display the related recommendation information flow corresponding to the first multimedia resource on the related recommendation page.

In an optional implementation, the acquiring module further includes:
a playing submodule, configured to play the first multimedia resource previously played on the playback page in a predetermined playback window on a recommendation details page in a zoom-out manner;
correspondingly, the second acquiring submodule includes:
   a second display submodule, configured to display the complete theme information of the first multimedia resource and the related recommendation information flow corresponding to the first multimedia resource in the bottom panel on the recommendation details page.

In an optional implementation, the second acquiring submodule includes:
a third display submodule, configured to display the complete theme information of the first multimedia resource and the related recommendation information flow corresponding to the first multimedia resource in the bottom panel on the playback page.

In the apparatus for processing the multimedia resources according to the embodiment of the present invention, firstly, based on the predetermined trigger operation acting on the playback page of the first multimedia resource, the related recommendation information flow corresponding to the first multimedia resource is acquired, and the related recommendation information flow is displayed on the related recommendation page; and then, when the first predetermined sliding operation acting on the related recommendation page is received, the next multimedia resource adjacent to the currently played multimedia resource in the related recommendation information flow is determined as the target multimedia resource, and the target multimedia resource is played in the top page region on the related recommendation page. It can be seen that according to the embodiment of the present disclosure, based on the first predetermined sliding operation on the related recommendation page, the next multimedia resource in the related recommendation information flow can be triggered to be played in the top page region on the related recommendation page, so that a playing mode of the multimedia resources in the related recommendation information flow on the related recommendation page is diversified, thereby enriching related functions of the multimedia resources and improving the user experience.

In addition to the above method and apparatus, the embodiments of the present disclosure further provide a computer-readable storage medium storing instructions therein, wherein the instructions, when running on a terminal device, cause the terminal device to implement the method for processing the multimedia resources described in the embodiments of the present disclosure.

The embodiments of the present disclosure further provide a computer program product. The computer program product includes a computer program/instructions, wherein when the computer program/instructions is executed by a processor, the processor implements the method for processing the multimedia resources described in the embodiments of the present disclosure.

In addition, the embodiments of the present disclosure further provide a device for processing multimedia resources. Referring to Fig. 7, the device may include:
a processor 701, a memory 702, an input device 703 and an output device 704. The number of processors 701 in the device for processing the multimedia resources may be one or more, and one processor is taken as an example in Fig. 7. In some embodiments of the present disclosure, the processor 701, the memory 702, the input device 703 and the output device 704 may be connected by a bus or other ways. Here, the connection by the bus is taken as an example in Fig. 7.

The memory 702 may be configured to store software programs and modules. The processor 701 executes various functional applications and data processing of the device for processing the multimedia resources by running the software programs and modules stored in the memory 702. The memory 702 may mainly include a program storage region and a data storage region. The program storage region may store an operating system, applications required by at least one function, and the like. In addition, the memory 702 may include a high-speed random access memory and may further include a non-volatile memory, such as at least one magnetic disk storage device, a flash memory device, or other volatile solid-state memory devices. The input device 703 may be configured to receive input numeric or character information and generate a signal input related to user settings and function controls for the device for processing the multimedia resources.

Specifically, in the present embodiment, the processor 701 will load executable files corresponding to processes of one or more application programs into the memory 702 according to the following instructions, and the processor 701 will run the application programs stored in the memory 702, so as to achieve various functions of the device for processing the multimedia resources.

It should be noted that, as used herein, relation terms such as "first" and "second" are used merely to distinguish a subject or an operation from another subject or another operation, and not to require or imply any substantial relation or order between these subjects or operations. Moreover, terms "include", "contain" or any variation thereof are intended to cover nonexclusive containing, such that a process, a method, an item or a device containing a series of elements not only includes these elements, but also includes other elements that are not set forth specifically, or also includes an inherent element of such a process, method, item or device. In the absence of further limitation, an element defined by a phrase "include a" does not mean that other identical elements are excluded from the process, method, item or device including said element.

The above only describes specific implementations of the present disclosure, which enable those skilled in the art to understand or implement the present disclosure. The various modifications to these embodiments will be obvious to those skilled in the art, and the general principles defined herein may be implemented in other embodiments without departing from the spirit or scope of the present disclosure. Therefore, the present disclosure will not be limited to these embodiments described herein, but should be consistent with the widest scope conforming to the principles and novelty features disclosed herein.

## Claims

1. A method for processing multimedia resources, **characterized in** comprising:
acquiring, based on a predetermined trigger operation acting on a playback page of a first multimedia resource, a related recommendation information flow corresponding to the first multimedia resource, and displaying the related recommendation information flow on a related recommendation page, wherein the related recommendation information flow comprises a multimedia resource related to at least one feature dimension of the first multimedia resource, and the multimedia resource comprises video and/or image-text content;
in response to a first predetermined sliding operation acting on the related recommendation page, determining a next multimedia resource adjacent to a currently played multimedia resource in the related recommendation information flow as a target multimedia resource, and playing the target multimedia resource in a top page region on the related recommendation page, the top page region being adapted to a display range of the target multimedia resource.

2. The method according to claim 1, **characterized in that** in response to the first predetermined sliding operation acting on the related recommendation page, determining the next multimedia resource adjacent to the currently played multimedia resource in the related recommendation information flow as the target multimedia resource comprises:
in response to the first predetermined sliding operation acting on the related recommendation page, acquiring sliding information of the first predetermined sliding operation, wherein the sliding information comprises a sliding speed and/or sliding displacement;
in accordance with a determination that the sliding information meets a first predetermined condition, determining the next multimedia resource adjacent to the currently played multimedia resource in the related recommendation information flow as the target multimedia resource, wherein the first predetermined condition is a matching condition for the sliding speed and/or the sliding displacement.

3. The method according to claim 2, **characterized in that** in accordance with a determination that the sliding information meets the first predetermined condition, determining the next multimedia resource adjacent to the currently played multimedia resource in the related recommendation information flow as the target multimedia resource comprises:
in accordance with a determination that the sliding speed in the sliding information is greater than a predetermined speed threshold, or in accordance with a determination that the sliding speed in the sliding information is not greater than the predetermined speed threshold and the sliding displacement in the sliding information is greater than a predetermined displacement threshold, determining the next multimedia resource adjacent to the currently played multimedia resource in the related recommended information flow as the target multimedia resource.

4. The method according to claim 1, **characterized in that** after displaying the related recommendation information flow on the related recommendation page, the method further comprises:
in response to a selecting operation for any multimedia resource displayed on the related recommendation page, determining the selected multimedia resource as the target multimedia resource, and continuing playing the target multimedia resource in the top page region on the related recommendation page.

5. The method according to claim 1, **characterized in that** acquiring, based on the predetermined trigger operation acting on the playback page of the first multimedia resource, the related recommendation information flow corresponding to the first multimedia resource, and displaying the related recommendation information flow on the related recommendation page comprises:
in response to a trigger operation for a related recommendation control on the playback page of the first multimedia resource, acquiring the related recommendation information flow corresponding to the first multimedia resource;
jumping from the playback page to the related recommendation page, and displaying the related recommendation information flow on the related recommendation page.

6. The method according to claim 1, **characterized in that** acquiring, based on the predetermined trigger operation acting on the playback page of the first multimedia resource, the related recommendation information flow corresponding to the first multimedia resource, and displaying the related recommendation information flow on the related recommendation page comprises:
in response to a trigger operation acting within a theme display region on the playback page of the first multimedia resource, acquiring the related recommendation information flow corresponding to the first multimedia resource, and displaying, in a bottom panel, complete theme information of the first multimedia resource and the related recommendation information flow corresponding to the first multimedia resource;
in response to a second predetermined sliding operation acting on the bottom panel, displaying the related recommendation information flow corresponding to the first multimedia resource on the related recommendation page.

7. The method according to claim 6, **characterized in that** before displaying, in the bottom panel, the complete theme information of the first multimedia resource and the related recommendation information flow corresponding to the first multimedia resource, the method further comprises:
playing, in a predetermined playback window on a recommendation details page and in a zoom-out manner, the first multimedia resource previously played on the playback page;
correspondingly, displaying, in the bottom panel, the complete theme information of the first multimedia resource and the related recommendation information flow corresponding to the first multimedia resource comprises:
displaying, in a bottom panel on the recommendation details page, the complete theme information of the first multimedia resource and the related recommendation information flow corresponding to the first multimedia resource.

8. The method according to claim 6, **characterized in that** displaying, in the bottom panel, the complete theme information of the first multimedia resource and the related recommendation information flow corresponding to the first multimedia resource comprises:
displaying, in the bottom panel on the playback page, the complete theme information of the first multimedia resource and the related recommendation information flow corresponding to the first multimedia resource.

9. An apparatus for processing multimedia resources, **characterized in** comprising:
an acquiring module, configured to acquire, based on a predetermined trigger operation acting on a playback page of a first multimedia resource, a related recommendation information flow corresponding to the first multimedia resource, and display the related recommendation information flow on a related recommendation page, wherein the related recommendation information flow comprises a multimedia resource related to at least one feature dimension of the first multimedia resource, and the multimedia resource comprises video and/or image-text content;
a first determining module, configured to, in response to a first predetermined sliding operation acting on the related recommendation page, determine a next multimedia resource adjacent to a currently played multimedia resource in the related recommendation information flow as a target multimedia resource, and play the target multimedia resource in a top page region on the related recommendation page, the top page region being adapted to a display range of the target multimedia resource.

10. A computer-readable storage medium **characterized in** storing instructions therein, wherein the instructions, when running on a terminal device, cause the terminal device to implement the method according to any one of claims 1 to 8.

11. A device for processing multimedia resources, **characterized in** comprising: a memory, a processor, and a computer program stored in the memory and runnable on the processor, wherein when executing the computer program, the processor implements the method according to any one of claims 1 to 8.
